# EUROPEAN PATENT SPECIFICATION

(11) **EP 4 534 885 B1**
(45) Date of publication and mention of the grant of the patent: **11.11.2026**
(21) Application number: 24812052.9
(22) Date of filing: 29.07.2024
(51) Int. Cl.: F16L 55/32, F16L 101/30, F16L 55/26

(54) **ROBOT SUITABLE FOR SYNCHRONOUS INSPECTION OF LONG BRANCH PIPES AND MAIN PIPE, AND INSPECTION METHOD**
ROBOTER ZUR SYNCHRONEN INSPEKTION VON LANGEN ABZWEIGROHREN UND HAUPTROHR SOWIE INSPEKTIONSVERFAHREN
ROBOT APPROPRIÉ POUR L'INSPECTION SYNCHRONE DE CONDUITES DÉRIVÉES LONGUES ET DE CONDUITE PRINCIPALE, ET PROCÉDÉ D'INSPECTION

(30) Priority: 08.08.2023 CN 202310988202
(43) Date of publication of application: 09.04.2025
(73) Proprietor: State Grid Anhui Electric Power Research Institute, Hefei, Anhui 230601 (CN)
(72) Inventor: ZHANG, Jiaqing, Hefei Anhui 230601 (CN); GUO, Yi, Hefei Anhui 230601 (CN); XIE, Jia, Hefei Anhui 230601 (CN); WANG, Liufang, Hefei Anhui 230601 (CN); ZHU, Taiyun, Hefei Anhui 230601 (CN); SUN, Jian, Hefei Anhui 230601 (CN); WANG, Shuping, Hefei Anhui 230601 (CN); HUANG, Yubiao, Hefei Anhui 230601 (CN); HE, Yang, Hefei Anhui 230601 (CN); SHANG, Fengju, Hefei Anhui 230601 (CN); LIU, Rui, Hefei Anhui 230601 (CN); TAN, Tiantian, Hefei Anhui 230601 (CN); LIU, Xin, Hefei Anhui 230601 (CN); XIE, Tao, Hefei Anhui 230601 (CN); SUN, Tao, Hefei Anhui 230601 (CN)
(74) Representative: Rapisardi, Mariacristina
(86) International application number: PCT/CN2024/108096
(87) International publication number: WO 2025/031185

(56) References cited:
- CN-A- 105 035 192
- CN-A- 105 035 192
- CN-A- 105 292 281
- CN-A- 112 171 680
- CN-A- 113 357 481
- CN-A- 114 872 063
- CN-A- 116 697 190
- KR-B1- 102 178 927
- KR-B1- 102 178 927

## Description

### TECHNICAL FIELD

The present application relates to the technical field of pipeline patrol, for example, a robot and patrol method applicable to synchronous patrol of a long branch pipeline and a main pipeline.

### BACKGROUND

In an accident oil discharge pipeline network of an extra-high voltage converter station, a branch pipeline and a main pipeline have horizontally arranged pipeline sections, and each of the main pipeline and the branch pipeline has a relatively small pipeline diameter. Generally, the main pipeline has a pipeline diameter of 600 mm, and the branch pipeline has a pipeline diameter of 500 mm. A conventional detection robot can only detect an internal condition of the main pipeline and a condition of a position near a connection between the branch pipeline and the main pipeline in a single trip down to a well. For a relatively long branch pipeline, a walking mechanism of the robot cannot directly turn into the branch pipeline for detection and cannot complete the detection work. In an actual environment, some relatively large and relatively high obstacles exist inside the main pipeline. A conventional crawler walking mechanism with a relatively large size and a relatively heavy mass is mostly applicable to large-diameter pipeline detection and does not conform to the patrol of the accident oil discharge pipeline network of the extra-high voltage converter station. A conventional multi-legged walking mechanism has the problems such as an insufficient traction force, a relatively short operation travel and complex motion control and is also not suitable for the patrol of the accident oil discharge pipeline network of the extra-high voltage converter station. A wheeled walking mechanism is compact in structure, simple to control, strong in maneuverability and stable in operation, thereby meeting requirements of the pipeline patrol.

In Patent Publication No. CN110576953A of the related art, a child-mother underwater detection robot system for a large-diameter long water diversion tunnel includes a shore-based control container, a vehicle-mounted winch system, a crawling mother patrol robot and a mobile child detection robot, where the vehicle-mounted winch system is used for laying and recovering a cable, one end of the cable is connected to the crawling mother patrol robot, the other end of the cable is connected to the control container, and the mobile child detection robot is installed on the crawling mother patrol robot. Using an operation mode of the crawling mother patrol robot and the mobile child detection robot can adapt to omni-directional and multi-level detection in a complex environment of the tunnel. However, the crawling mother patrol robot enters a detected pipeline together with the child detection robot. The mother patrol robot is a crawler robot, and the child detection robot can suspend in the water pipeline, which is not applicable to this application scenario.

Further relevant technologies are also known from KR102178927B1 which relates to AGV control robot system using a mecanum wheel.

### SUMMARY

The technical problems to be solved in the present application are to solve the problems that for horizontally disposed main and branch pipelines, a conventional detection robot cannot comprehensively patrol a relatively long branch pipeline while patrolling the main pipeline and cannot cross an obstacle when walking in the main pipeline.

The invention is set out in the appended set of claims.

### BRIEF DESCRIPTION OF DRAWINGS

FIG. 1 is a schematic diagram of a robot applicable to synchronous patrol of a long branch pipeline and a main pipeline according to embodiments of the present application.
FIG. 2 is a schematic diagram of a walking apparatus according to embodiments of the present application.
FIG. 3 is a schematic diagram of a walking mechanism and a front wheel obstacle-crossing apparatus according to embodiments of the present application.
FIG. 4 is a section view of FIG. 2 according to embodiments of the present application along A-A.
FIG. 5 is a schematic diagram of a sub-walking apparatus according to embodiments of the present application.
FIG. 6 is a schematic diagram of a sub-walking apparatus at another angle according to embodiments of the present application.
FIG. 7 is a flowchart of a patrol method according to embodiments of the present application.

### DETAILED DESCRIPTION

To facilitate those skilled in the art to understand the technical solutions of the present application, the technical solutions of the present application are further described in conjunction with drawings in the specification.

Terms such as "first" and "second" are used only for the purpose of description and are not to be construed as indicating or implying relative importance or implicitly indicating the number of technical features indicated. Thus, a feature defined as a "first" feature or a "second" feature may explicitly or implicitly include one or more of such features. As used herein, the term "plurality" is defined as two or more, unless otherwise expressly specified and limited.

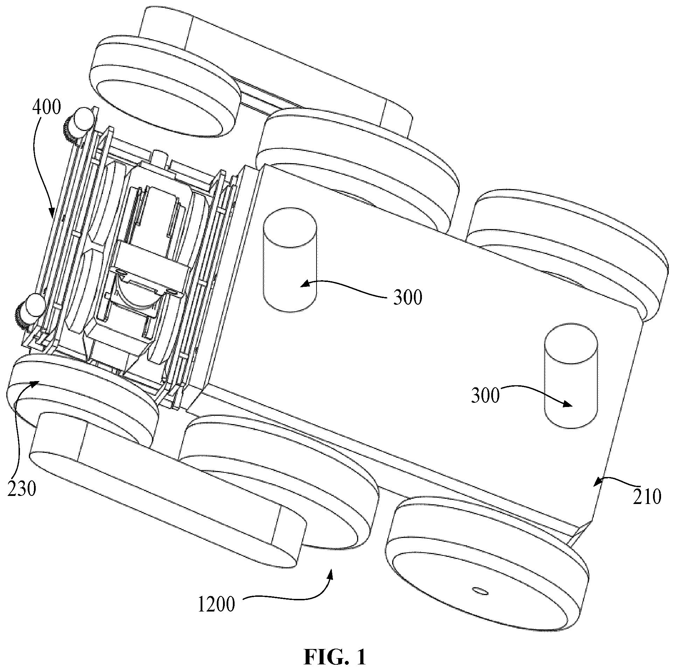

Referring to FIG. 1, the present application provides a robot applicable to synchronous patrol of a long branch pipeline and a main pipeline. The robot includes a walking apparatus 1200 and detection apparatuses 300 located on a top of the walking apparatus 1200, where the detection apparatuses 300 accompany the walking apparatus 1200 to patrol the main pipeline. The robot further includes a sub-walking apparatus 400 located at a front end of the walking apparatus 1200, where front wheel obstacle-crossing apparatuses 230 of the walking apparatus 1200 is also capable of limiting the sub-walking apparatus 400 while crossing an obstacle in the main pipeline, and when the branch pipeline is encountered by the robot, the front wheel obstacle-crossing apparatuses 230 are lifted to a preset height, an outlet of a bin of the sub-walking apparatus 400 is released, and the sub-walking apparatus 400 is separated from the walking apparatus 1200 and independently patrols the branch pipeline.

In this embodiment, horizontally disposed main and branch pipelines are parallelly detected by using a child-mother walking apparatus. The walking apparatus detects the main pipeline, and the sub-walking apparatus independently detects the branch pipeline. When a relatively large obstacle is encountered by the robot, obstacle-crossing wheels of the front wheel obstacle-crossing apparatuses are capable of being lifted to a certain angle, and walking mechanisms of the walking apparatus drive the obstacle-crossing wheels to cross the obstacle.

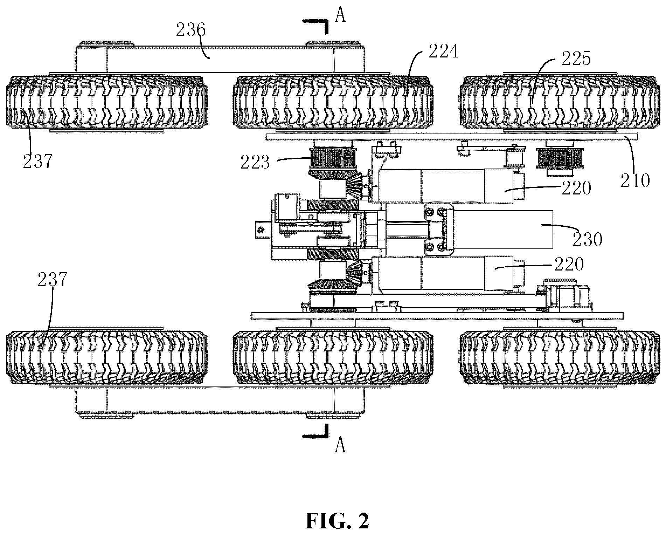

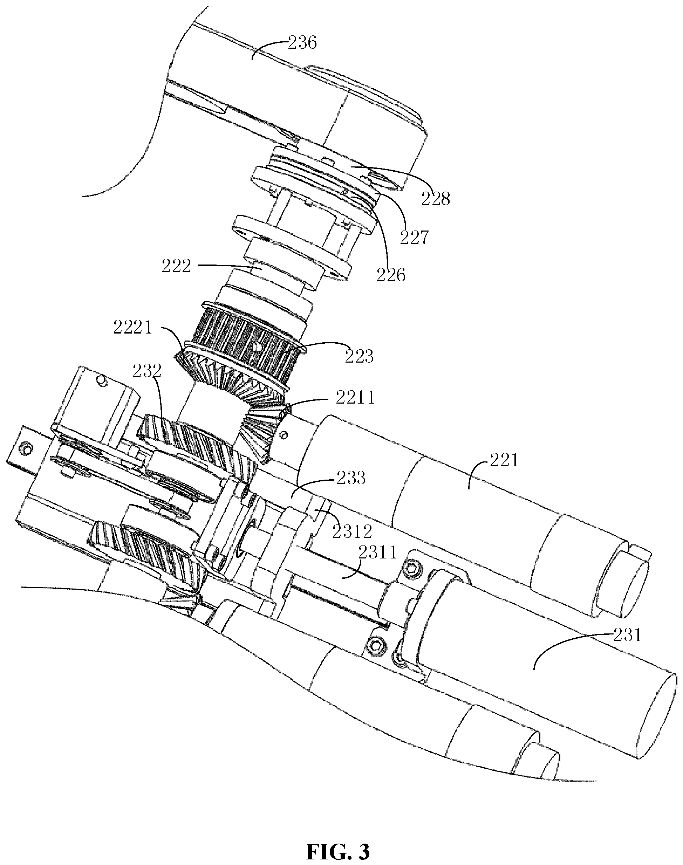

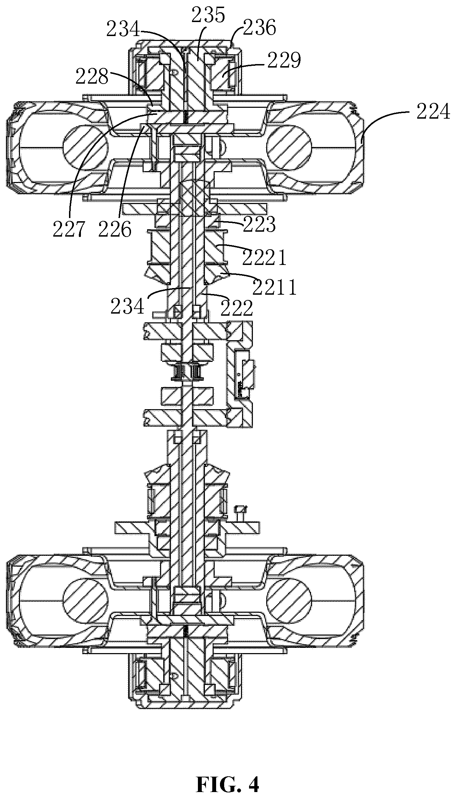

Referring to FIGS. 1 to 4, in an embodiment of the present application, the walking apparatus 1200 includes a walking trunk 210, walking mechanisms 220 disposed symmetrically on two sides of the walking trunk 210, respectively, and front wheel obstacle-crossing apparatuses 230 coaxially connected to the walking mechanisms 220. When a relatively large obstacle is encountered by the robot, the obstacle-crossing wheels 237 of the front wheel obstacle-crossing apparatuses 230 are capable of being lifted to a certain angle, and the walking mechanisms 220 drive the obstacle-crossing wheels 237 to cross the obstacle. The two walking mechanisms 220 drive independently so that the walking apparatus 1200 can advance, reverse and perform pivot steering in the pipeline. This embodiment is described in detail by using one walking mechanism as an example.

Referring to FIGS. 1 to 4, in an embodiment of the present application, the front wheel obstacle-crossing apparatuses 230 include a swing motor 231, a swing arm gear 232 and a rack 233 that are located in the walking trunk 210 and a concentric shaft 234 coaxially connected to the swing arm gear 232 and passing through a side of the walking trunk 210. The front wheel obstacle-crossing apparatuses 230 further include an inner shaft sleeve 235 located on an outer side of the walking trunk 210 and coaxially and fixedly connected to the concentric shaft 234, a swing arm housing 236 fixedly connected to the inner shaft sleeve 235 and obstacle-crossing wheels 237 fixedly connected to the swing arm housing 236. The swing motor 231 transmits power to the swing arm gear 232 and the rack 233 through a screw rod 2311 and a screw nut 2312, and the swing arm gear 232 is meshed with the rack 233 to drive the concentric shaft 234 to rotate and to link the inner shaft sleeve 235 and the swing arm housing 236 to rotate so that the swing arm housing 236 swings upward or downward and drives the obstacle-crossing wheels 237 to move in the same direction.

Referring to FIGS. 1 to 4, in an embodiment of the present application, the walking mechanism 220 includes a walking drive motor 221, a concentric outer shaft 222 coaxially connected to the concentric shaft 234, a first synchronization apparatus 223 and driving wheels 224 that are fixed on the concentric outer shaft 222 and driven wheels 225 belt-driven with the driving wheels 224 by the first synchronization apparatus 223. The walking drive motor 221 drives a transmission bevel gear 2221 located on the concentric outer shaft 222 through a driver bevel gear 2211 on an output end, the transmission bevel gear 2221 drives the concentric outer shaft 222 to rotate, the concentric outer shaft 222 synchronously drives the first synchronization apparatus 223 to rotate, and a synchronous belt of the first synchronization apparatus 223 drives the driving wheels 224 and the driven wheels 225 to rotate synchronously.

Referring to FIGS. 1 to 4, in an embodiment of the present application, the walking mechanism 220 further includes a bearing fixing plate 226, a cross roller bearing 227, an outer shaft sleeve 228 and a second synchronization apparatus 229. The bearing fixing plate 226 is located on the outer side of the walking trunk 210 and is connected to the concentric outer shaft 222. The outer shaft sleeve 228 and an outer ring of the cross roller bearing 227 are fixedly connected to the bearing fixing plate 226 in sequence. The inner shaft sleeve 235 is fixedly connected to an inner ring of the cross roller bearing 227. The second synchronization apparatus 229 is located on the outer shaft sleeve 228 and is located in the swing arm housing 236, a synchronous belt of the second synchronization apparatus 229 belt drives the obstacle-crossing wheels 237, and when the concentric outer shaft 222 rotates, the second synchronization apparatus 229 is driven to rotate, and the synchronous belt of the second synchronization apparatus 229 drives the obstacle-crossing wheels 237 to rotate, that is, the obstacle-crossing wheels 237 rotate synchronously with the driving wheels 224 and the driven wheels 225.

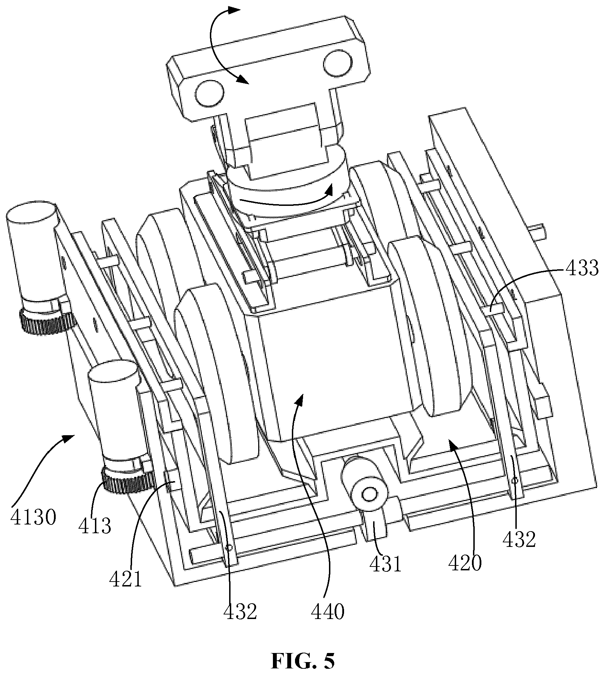

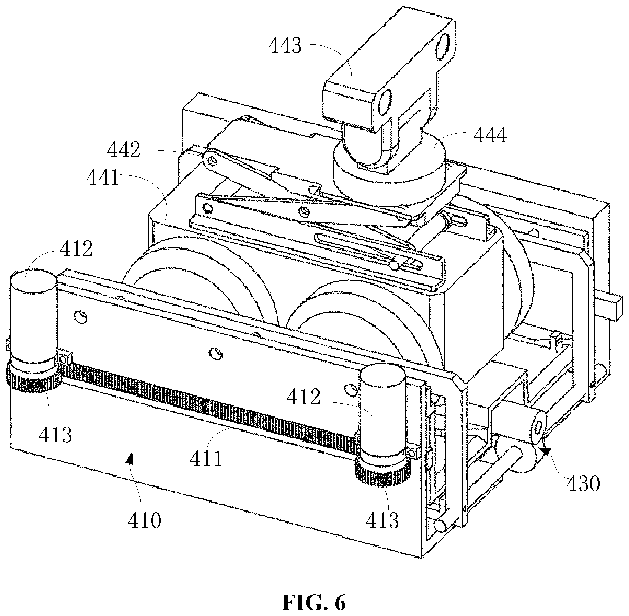

Referring to FIGS. 1, 5 and 6, in an embodiment of the present application, the sub-walking apparatus 400 includes a sub-machine bin 4130 and a sub-machine 440 located in the sub-machine bin 4130. The sub-machine bin 4130 is located at a front end of the walking body 210 and is located between the pair of front wheel obstacle-crossing apparatuses 230, and the obstacle-crossing wheels 237 limit two-way outlets of the sub-machine 440 on the sub-machine bin 4130.

Referring to FIGS. 1, 5 and 6, in an embodiment of the present application, the sub-machine bin 4130 includes a sub-machine bin seat 410, a sub-machine slide plate 420 and a sub-machine clamp 430. The sub-machine bin seat 410 is capable of rotating around the walking trunk 210 to adjust an angle of the sub-machine 440 exiting from the bin. The sub-machine slide plate 420 is located inside the sub-machine bin seat 410 and is capable of translationally sliding in the sub-machine bin seat 410. The sub-machine clamp 430 clamps or releases the sub-machine 440 in a direction perpendicular to the sub-machine slide plate 420 in the sub-machine slide plate 420. A drive motor of the sub-machine bin seat is disposed in the walking trunk 210. An output end of the drive motor of the sub-machine bin seat passes through the front end of the walking trunk 210 and is fixedly connected to one end surface of the sub-machine bin seat 410. The drive motor of the sub-machine bin seat rotates to drive the sub-machine bin seat 410 to rotate to adjust the angle of the sub-machine 440 exiting from the bin. A drive sliding chute 411 is disposed on the other end surface of the sub-machine bin seat 410, sliding motors 412 are disposed at two ends of the drive sliding chute 411, respectively, drive gears 413 are disposed at output ends of the sliding motors 412, and meshing teeth of the drive gears 413 are located in the drive sliding chute 411. The sub-machine slide plate 420 is located in the sub-machine bin seat 410. A sliding rack 421 is disposed on a side surface close to the sliding motors 412 and is meshed with the drive sliding chute 411. When the sliding motors 412 rotate, the drive gears 413 are driven to be meshed with the sliding rack 421 so that the sub-machine slide plate 420 translationally slides in the sub-machine bin seat 410. The sub-machine clamp 430 includes an electric push rod 431 and clamp frames 432 connected to two ends of the electric push rod 431, respectively. The electric push rod 431 is located at a bottom of the sub-machine slide plate 420, and a right-hand thread and a left-hand thread are disposed at the two ends, respectively. When the electric push rod 431 rotates forward or reversely, the clamp frames 432 connected to the two ends of the electric push rod 431, respectively, can move toward or away from each other to clamp or release the sub-machine 440. Multiple slide posts 433 are disposed on a top of the clamp frame 432. One end of the slide post 433 is fixedly connected to the clamp frame 432, and the other end abuts against an inner wall of the sub-machine bin seat 410 after passing through the sub-machine slide plate 420. In addition to connecting the sub-machine slide plate 420 to the sub-machine clamp 430, the slide post 433 also has a certain supporting effect. The electric push rod 431 is connected to the clamp frames 432 at two ends of the bin outlet.

Referring to FIGS. 1, 5 and 6, in an embodiment of the present application, the sub-machine 440 includes a sub-machine body 441, a telescopic apparatus 442 located on the sub-machine body 441 and a pan-tilt camera 443 located on a top of the telescopic apparatus 442. The sub-machine body 441 advances or reverses in the branch pipeline, the pan-tilt camera 443 accompanies the sub-machine body 441 to walk and patrol the branch pipeline, and the telescopic apparatus 442 drives the pan-tilt camera 443 to rise or fall. A rotating table 444 is disposed on the top of the telescopic apparatus 442, and the pan-tilt camera 443 is located on the rotating table 444 so that the pan-tilt camera 443 can axially rotate, radially swing and detect at multiple angles. In this embodiment, the telescopic apparatus 442 is a simple scissor-shaped telescopic frame, and the detection apparatuses 300 are monitoring systems.

Referring to FIGS. 1 to 6, in an embodiment of the present application, a radar (not shown in the figures) is further installed on the walking trunk 210, and a cable connector (not shown in the figures) is further fixed on a tail of the walking trunk 210. The cable connector is fixed on the tail of the walking trunk 210 in manners such as a screw or welding. The cable connector is fixed on one end of a cable, and the other end of the cable is located on a ground and is connected to the control apparatus. The cable and the control apparatus are configured to manipulate an action of the robot, mainly provide a constant internal tensile stress for dragging when the robot advances or returns in the pipeline and control and transmit a signal.

A beneficial effect of the present application is to solve the problem that a conventional detection robot can only detect an internal condition of a main pipeline and a condition of a position near a connection between a branch pipeline and the main pipeline in a single trip down to a well and for a relatively long branch pipeline, a walking mechanism of the robot cannot directly turn into the branch pipeline for detection and cannot complete the detection work. Compared with the case that only one robot matched with a size of a branch pipeline is used for detecting both a main pipeline and the branch pipeline, the reliability of the patrol is ensured, and the timeliness of the patrol is improved. The robot matched with the size of the branch pipeline is easily tripped by large pieces of solid wastes in the pipeline such as a brick, a cement block or a rebar due to a relatively small size when patrolling the main pipeline so that the reliability of the patrol cannot be ensured. Moreover, one robot patrols both the main pipeline and the branch pipeline, and the patrol mileage in a single trip down to a well is relatively short so that the propulsion of the pipeline patrol is relatively slow and the timeliness cannot be ensured.

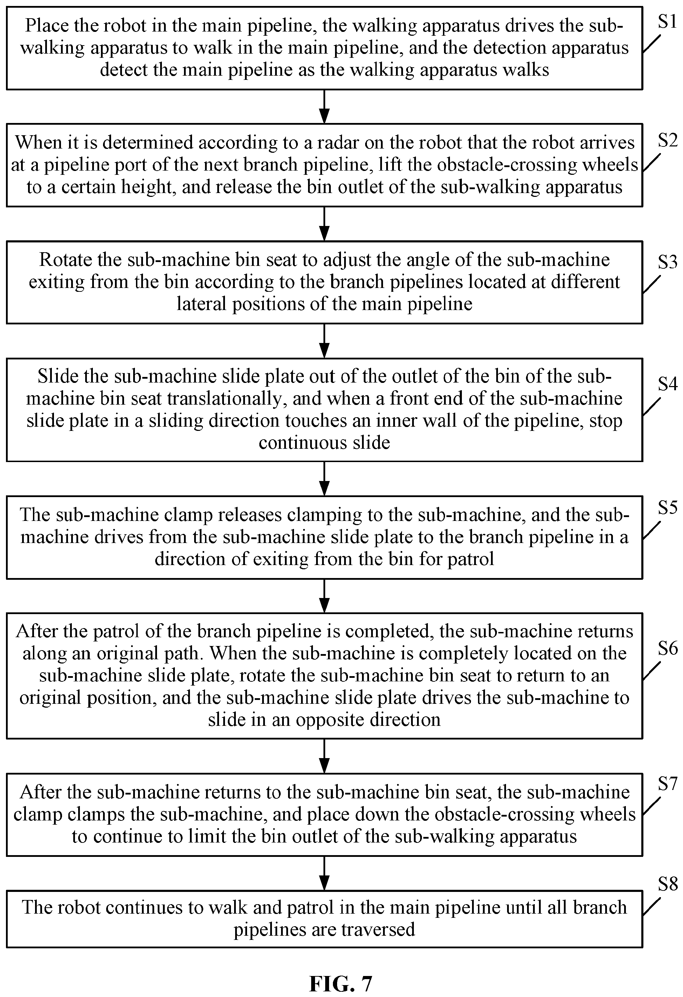

Referring to FIG. 7, the present application further provides a patrol method for a robot applicable to synchronous patrol of a long branch pipeline and a main pipeline. The method includes the steps described below.

In S1, the robot is placed in the main pipeline, the walking apparatus 1200 drives the sub-walking apparatus 400 to walk in the main pipeline, and the detection apparatuses 300 detect the main pipeline as the walking apparatus 1200 walks.

In S2, when it is determined according to a radar on the robot that the robot arrives at a pipeline port of the next branch pipeline, the obstacle-crossing wheels 237 are lifted to a certain height, and the bin outlet of the sub-walking apparatus 400 is released.

In S3, the sub-machine bin seat 410 is rotated to adjust the angle of the sub-machine 440 exiting from the bin according to branch pipelines located at different lateral positions of the main pipeline.

In S4, the sub-machine slide plate 420 is translationally slid out of the bin outlet of the sub-machine bin seat 410, and when a front end of the sub-machine slide plate 420 in a sliding direction touches an inner wall of the pipeline, continuous slide is stopped.

In S5, the sub-machine clamp 430 releases clamping to the sub-machine 440, and the sub-machine 440 drives from the sub-machine slide plate 420 to the branch pipeline in a direction of exiting from the bin for patrol.

In S6, after the patrol of the branch pipeline is completed, the sub-machine 440 returns along an original path. When the sub-machine 440 is completely located on the sub-machine slide plate 420, the sub-machine bin seat 410 is rotated to return to an original position, and the sub-machine slide plate 420 drives the sub-machine 440 to slide in an opposite direction.

In S7, after the sub-machine 440 returns to the sub-machine bin seat 410, the sub-machine clamp 430 clamps the sub-machine 440, and the obstacle-crossing wheels 237 are placed down to continue to limit the bin outlet of the sub-walking apparatus 400.

In S8, the robot continues to walk and patrol in the main pipeline until all branch pipelines are traversed.

## Claims

1. A robot applicable to synchronous patrol of a long branch pipeline and a main pipeline, comprising:
a walking apparatus (1200);
a detection apparatus (300), located on a top of the walking apparatus (1200), wherein the detection apparatus (300) is configured to accompany the walking apparatus (1200) to patrol the main pipeline; and
wherein the robot is **characterized in that**, a sub-walking apparatus (400), located at a front end of the walking apparatus (1200);
wherein a pair of front wheel obstacle-crossing apparatuses (230) of the walking apparatus (1200) are capable of limiting the sub-walking apparatus (400) while crossing an obstacle in the main pipeline; and when the robot encounters the branch pipeline, the front wheel obstacle-crossing apparatuses (230) are configured to lift to a certain height and release an outlet of a bin of the sub-walking apparatus (400), and the sub-walking apparatus (400) is configured to be separated from the walking apparatus (1200) and independently patrol the branch pipeline;
the sub-walking apparatus (400) comprises a sub-machine bin (4130) and a sub-machine (440) located in the sub-machine bin (4130), wherein the sub-machine bin (4130) is located at a front end of a walking trunk (210) of the walking apparatus (1200) and is located between the pair of front wheel obstacle-crossing apparatuses (230), and obstacle-crossing wheels (237) of the front wheel obstacle-crossing apparatuses (230) are configured to limit two-way outlets of the sub-machine (440) on the sub-machine bin (4130); and
the sub-machine bin (4130) comprises a sub-machine bin seat (410), a sub-machine slide plate (420) and a sub-machine clamp (430), wherein the sub-machine bin seat (410) is capable of rotating around the walking trunk (210) to adjust an angle of the sub-machine (440) exiting from the bin, the sub-machine slide plate (420) is located inside the sub-machine bin seat (410) and is capable of translationally sliding in the sub-machine bin seat (410), and the sub-machine clamp (430) is configured to clamp or release the sub-machine (440) in a direction perpendicular to the sub-machine slide plate (420) in the sub-machine slide plate (420).

2. The robot according to claim 1, **characterized in that** the walking apparatus (1200) further comprises walking mechanisms (220) disposed symmetrically on two sides of the walking trunk (210), respectively;
the front wheel obstacle-crossing apparatuses (230) are coaxially connected to the walking mechanisms (220); and
when the robot encounters a relatively large obstacle, the obstacle-crossing wheels (237) of the front wheel obstacle-crossing apparatuses (230) are capable of being lifted to a certain angle, and the walking mechanisms (220) are configured to drive the obstacle-crossing wheels (237) to cross the obstacle.

3. The robot according to claim 2, **characterized in that** the front wheel obstacle-crossing apparatuses (230) comprise a swing motor (231), a swing arm gear (232) and a rack (233) that are located in the walking trunk (210) and a concentric shaft (234) coaxially connected to the swing arm gear (232) and passing through a side of the walking trunk (210); and
the front wheel obstacle-crossing apparatuses (230) further comprise an inner shaft sleeve (235) located on an outer side of the walking trunk (210) and coaxially and fixedly connected to the concentric shaft (234), a swing arm housing (236) fixedly connected to the inner shaft sleeve (235) and the obstacle-crossing wheels (237) fixedly connected to the swing arm housing (236).

4. The robot according to claim 3, **characterized in that** the swing motor (231) is configured to transfer power to the swing arm gear (232) and the rack (233) through a screw rod (2311) and a screw nut (2312), and the swing arm gear (232) is meshed with the rack (233) to drive the concentric shaft (234) to rotate and to link the inner shaft sleeve (235) and the swing arm housing (236) to rotate so that the swing arm housing (236) swings upward or downward and is capable of driving the obstacle-crossing wheels (237) to move in a same direction.

5. The robot according to claim 4, **characterized in that** the walking mechanism (220) comprises a walking drive motor (221), a concentric outer shaft (222) coaxially connected to the concentric shaft (234), a first synchronization apparatus (223) and driving wheels (224) and driven wheels (225) belt-driven with the driving wheels (224) by the first synchronization apparatus (223), the first synchronization apparatus (223) and the driving wheels are fixed on the concentric outer shaft (222); and
the walking drive motor (221) is configured to drive a transmission bevel gear (2221) located on the concentric outer shaft (222) through a driver bevel gear (2211) on an output end, the transmission bevel gear (2221) is configured to drive the concentric outer shaft (222) to rotate, the concentric outer shaft (222) is configured to synchronously drive the first synchronization apparatus (223) to rotate, and a synchronous belt of the first synchronization apparatus (223) is configured to drive the driving wheels (224) and the driven wheels (225) to rotate synchronously.

6. The robot according to claim 5, **characterized in that** the walking mechanism (220) further comprises a bearing fixing plate (226), a cross roller bearing (227), an outer shaft sleeve (228) and a second synchronization apparatus (229); and
the bearing fixing plate (226) is located on the outer side of the walking trunk (210) and is connected to the concentric outer shaft (222);
the outer shaft sleeve (228) and an outer ring of the cross roller bearing (227) are fixedly connected to the bearing fixing plate (226) in sequence;
the inner shaft sleeve (235) is fixedly connected to an inner ring of the cross roller bearing (227);
the second synchronization apparatus (229) is located on the outer shaft sleeve (228) and is located in the swing arm housing (236), a synchronous belt of the second synchronization apparatus (229) is configured to belt-drive the obstacle-crossing wheels (237); and
when the concentric outer shaft (222) rotates, the obstacle-crossing wheels (237) are configured to be driven to rotate synchronously with the driving wheels (224) and the driven wheels (225).

7. The robot according to claim 1, **characterized in that** the sub-machine (440) comprises a sub-machine body (441), a telescopic apparatus (442) located on the sub-machine body (441) and a pan-tilt camera (443) located on a top of the telescopic apparatus (442); and
the sub-machine body (441) is capable of advancing or reversing in the branch pipeline;
the pan-tilt camera (443) is configured to accompany the sub-machine body (441) to walk and patrol the branch pipeline; and
the telescopic apparatus (442) is configured to drive the pan-tilt camera (443) to rise or fall, and the pan-tilt camera (443) is capable of axially rotating, radially swinging and detecting at a plurality of angles on the telescopic apparatus (442).

8. A patrol method for a robot applicable to synchronous patrol of a long branch pipeline and a main pipeline, being applied to the robot applicable to the synchronous patrol of the long branch pipeline and the main pipeline according to any one of claims 1 to 7 and **characterized by** comprising:
placing the robot in the main pipeline;
driving, by the walking apparatus (1200), the sub-walking apparatus (400) to walk in the main pipeline, and detecting, by the detection apparatus (300), the main pipeline as the walking apparatus (1200) walks;
when it is determined according to a radar on the robot that the robot arrives at a pipeline port of a next branch pipeline, lifting the obstacle-crossing wheels (237) to a certain height, and releasing an outlet of a bin of the sub-walking apparatus (400);
rotating the sub-machine bin seat (410) to adjust the angle of the sub-machine (440) exiting from the bin according to branch pipelines located at different lateral positions of the main pipeline;
translationally sliding the sub-machine slide plate (420) out of the outlet of the bin of the sub-machine bin seat (410), and when a front end of the sub-machine slide plate (420) in a sliding direction touches an inner wall of the pipeline, stopping continuous slide;
releasing, by the sub-machine clamp (430), clamping to the sub-machine (440), and driving, by the sub-machine (440), from the sub-machine slide plate (420) to the branch pipeline in a direction of exiting from the bin for patrol;
after the patrol of the branch pipeline is completed, returning, by the sub-machine (440), along an original path;
when the sub-machine (440) is completely located on the sub-machine slide plate (420), rotating the sub-machine bin seat (410) to return to an original position, and driving, by the sub-machine slide plate (420), the sub-machine (440) to slide in an opposite direction;
after the sub-machine (440) returns to the sub-machine bin seat (410), clamping, by the sub-machine clamp (430), the sub-machine (440), and placing down the obstacle-crossing wheels (237) to continue to limit the bin outlet of the sub-walking apparatus (400); and
continuing to walk and patrol, by the robot, in the main pipeline until all branch pipelines are traversed.

## Patentansprüche

1. Roboter, der für eine synchrone Inspektion einer langen Abzweigrohrleitung und einer Hauptrohrleitung anwendbar ist, umfassend:
eine Fahreinrichtung (1200);
eine Erkennungseinrichtung (300), die sich auf einer Oberseite der Fahreinrichtung (1200) befindet, wobei die Erkennungseinrichtung (300) ausgelegt ist, um die Fahreinrichtung (1200) bei der Inspektion der Hauptrohrleitung zu begleiten, und
wobei der Roboter **dadurch gekennzeichnet ist, dass** sich eine Unter-Fahreinrichtung (400) an einem vorderen Ende der Fahreinrichtung (1200) befindet,
wobei ein Paar von vorderen Rad-Hindernisüberwindungseinrichtungen (230) der Fahreinrichtung (1200) in der Lage ist, die Unter-Fahreinrichtung (400) während des Überwindens eines Hindernisses in der Hauptrohrleitung zu begrenzen, und wobei die vorderen Rad-Hindernisüberwindungseinrichtungen (230) ausgelegt sind, um sich auf eine gewisse Höhe anzuheben und einen Auslass eines Behälters der Unter-Fahreinrichtung (400) freizugeben, wenn der Roboter auf die Abzweigrohrleitung trifft, und wobei die Unter-Fahreinrichtung (400) ausgelegt ist, um von der Fahreinrichtung (1200) getrennt zu werden und die Abzweigrohrleitung unabhängig zu inspizieren,
wobei die Unter-Fahreinrichtung (400) einen Untermaschinenbehälter (4130) und eine Untermaschine (440), die sich in dem Untermaschinenbehälter (4130) befindet, umfasst, wobei sich der Untermaschinenbehälter (4130) an einem vorderen Ende eines Fahrkörpers (210) der Fahreinrichtung (1200) befindet und sich zwischen dem Paar von vorderen Rad-Hindernisüberwindungseinrichtungen (230) befindet und Hindernisüberwindungsräder (237) der vorderen Rad-Hindernisüberwindungseinrichtungen (230) ausgelegt sind, um Zweiwege-Auslässe der Untermaschine (440) auf dem Untermaschinenbehälter (4130) zu begrenzen, und
wobei der Untermaschinenbehälter (4130) einen Untermaschinenbehältersitz (410), eine Untermaschinengleitplatte (420) und eine Untermaschinenklemmvorrichtung (430) umfasst, wobei der Untermaschinenbehältersitz (410) in der Lage ist, sich um den Fahrkörper (210) herum zu drehen, um einen Winkel der aus dem Behälter austretenden Untermaschine (440) anzupassen, sich die Untermaschinengleitplatte (420) innerhalb des Untermaschinenbehältersitzes (410) befindet und in der Lage ist, translatorisch in den Untermaschinenbehältersitz (410) zu gleiten, und die Untermaschinenklemmvorrichtung (430) ausgelegt ist, um die Untermaschine (440) in einer Richtung senkrecht zu der Untermaschinengleitplatte (420) in der Untermaschinengleitplatte (420) zu klemmen oder freizugeben.

2. Roboter nach Anspruch 1, **dadurch gekennzeichnet, dass** die Fahreinrichtung (1200) ferner Fahrmechanismen (220) umfasst, die symmetrisch jeweils an zwei Seiten des Fahrkörpers (210) angeordnet sind,
wobei die vorderen Rad-Hindernisüberwindungseinrichtungen (230) koaxial mit den Fahrmechanismen (220) verbunden sind und
die Hindernisüberwindungsräder (237) der vorderen Rad-Hindernisüberwindungseinrichtungen (230), wenn der Roboter auf ein relativ großes Hindernis trifft, in der Lage sind, in einem gewissen Winkel angehoben zu werden, und die Fahrmechanismen (220) ausgelegt sind, um die Hindernisüberwindungsräder (237) so anzutreiben, dass sie das Hindernis überwinden.

3. Roboter nach Anspruch 2, **dadurch gekennzeichnet, dass** die vorderen Rad-Hindernisüberwindungseinrichtungen (230) einen Schwenkmotor (231), ein Schwenkarmzahnrad (232) und eine Zahnstange (233) umfassen, die sich in dem Fahrkörper (210) befinden, und eine konzentrische Welle (234), die koaxial mit dem Schwenkarmzahnrad (232) verbunden ist und durch eine Seite des Fahrkörpers (210) hindurchführt, und
wobei die vorderen Rad-Hindernisüberwindungseinrichtungen (230) ferner eine Innenwellenhülse (235), die sich an einer Außenseite des Fahrkörpers (210) befindet und koaxial und fest mit der konzentrischen Welle (234) verbunden ist, und eine Schwenkarmaufnahme (236), die fest mit der Innenwellenhülse (235) verbunden ist, umfassen, wobei die Hindernisüberwindungsräder (237) fest mit der Schwenkarmaufnahme (236) verbunden sind.

4. Roboter nach Anspruch 3, **dadurch gekennzeichnet, dass** der Schwenkmotor (231) ausgelegt ist, um Leistung auf das Schwenkarmzahnrad (232) und die Zahnstange (233) mittels einer Gewindespindel (2311) und einer Gewindemutter (2312) zu übertragen, und dass das Schwenkarmzahnrad (232) mit der Zahnstange (233) im Eingriff steht, um die konzentrische Welle (234) in Drehung zu versetzen und die Innenwellenhülse (235) und die Schwenkarmaufnahme (236) zum Drehen zu koppeln, sodass die Schwenkarmaufnahme (236) nach oben oder unten schwenkt und in der Lage ist, die Hindernisüberwindungsräder (237) in dieselbe Richtung in Bewegung zu versetzen.

5. Roboter nach Anspruch 4, **dadurch gekennzeichnet, dass** der Fahrmechanismus (220) einen Fahrantriebsmotor (221), eine konzentrische Außenwelle (222), die koaxial mit der konzentrischen Welle (234) verbunden ist, eine erste Synchronisationseinrichtung (223) und Antriebsräder (224) sowie angetriebene Räder (225), die durch die erste Synchronisationseinrichtung (223) per Riemen mit den Antriebsrädern (224) angetrieben werden, umfasst, wobei die erste Synchronisationseinrichtung (223) und die Antriebsräder an der konzentrischen Außenwelle (222) befestigt sind, und
wobei der Fahrantriebsmotor (221) ausgelegt ist, um ein Übertragungskegelrad (2221), das sich an der konzentrischen Außenwelle (222) befindet, mittels eines Antriebskegelrads (2211) an einem Ausgangsende anzutreiben, wobei das Übertragungskegelrad (2221) ausgelegt ist, um die konzentrische Außenwelle (222) in Drehung zu versetzen, wobei die konzentrische Außenwelle (222) ausgelegt ist, um die erste Synchronisationseinrichtung (223) synchron in Drehung zu versetzen, und ein Synchronriemen der ersten Synchronisationseinrichtung (223) ausgelegt ist, um die Antriebsräder (224) und die angetriebenen Räder (225) synchron in Drehung zu versetzen.

6. Roboter nach Anspruch 5, **dadurch gekennzeichnet, dass** der Fahrmechanismus (220) ferner eine Lagerbefestigungsplatte (226), ein Kreuzrollenlager (227), eine Außenwellenhülse (228) und eine zweite Synchronisationseinrichtung (229) umfasst und
sich die Lagerbefestigungsplatte (226) an der Außenseite des Fahrkörpers (210) befindet und mit der konzentrischen Außenwelle (222) verbunden ist,
wobei die Außenwellenhülse (228) und ein Außenring des Kreuzrollenlagers (227) nacheinander fest mit der Lagerbefestigungsplatte (226) verbunden sind,
wobei die Innenwellenhülse (235) fest mit einem Innenring des Kreuzrollenlagers (227) verbunden ist,
wobei sich die zweite Synchronisationseinrichtung (229) an der Außenwellenhülse (228) befindet und sich in der Schwenkarmaufnahme (236) befindet, ein Synchronriemen der zweiten Synchronisationseinrichtung (229) ausgelegt ist, um die Hindernisüberwindungsräder (237) per Riemen anzutreiben, und
die Hindernisüberwindungsräder (237), wenn sich die konzentrische Außenwelle (222) dreht, ausgelegt sind, um synchron mit den Antriebsrädern (224) und den angetriebenen Rädern (225) in Drehung versetzt zu werden.

7. Roboter nach Anspruch 1, **dadurch gekennzeichnet, dass** die Untermaschine (440) ein Untermaschinengehäuse (441), eine Teleskopeinrichtung (442), die sich an dem Untermaschinengehäuse (441) befindet, und eine Schwenk-Neige-Kamera (443), die sich auf einer Oberseite der Teleskopeinrichtung (442) befindet, umfasst, und
wobei das Untermaschinengehäuse (441) in der Lage ist, in der Abzweigrohrleitung vorwärts oder rückwärts zu fahren,
wobei die Schwenk-Neige-Kamera (443) ausgelegt ist, um das Untermaschinengehäuse (441) beim Abfahren und Inspizieren der Abzweigrohrleitung zu begleiten, und
wobei die Teleskopeinrichtung (442) ausgelegt ist, um die Schwenk-Neige-Kamera (443) so anzutreiben, dass sie angehoben oder abgesenkt wird, und die Schwenk-Neige-Kamera (443) in der Lage ist, sich axial zu drehen, radial zu schwenken und Erkennungsvorgänge an einer Vielzahl von Winkeln an der Teleskopeinrichtung (442) auszuführen.

8. Inspektionsverfahren für einen Roboter, der für eine synchrone Inspektion einer langen Abzweigrohrleitung und einer Hauptrohrleitung anwendbar ist, das auf den Roboter, der für die synchrone Inspektion der langen Abzweigrohrleitung und der Hauptrohrleitung anwendbar ist, nach einem der Ansprüche 1 bis 7 angewendet wird, **dadurch gekennzeichnet, dass** es Folgendes umfasst:
Platzieren des Roboters in der Hauptrohrleitung;
Antreiben der Unter-Fahreinrichtung (400) durch die Fahreinrichtung (1200) zum Fahren in der Hauptrohrleitung und Erkennen der Hauptrohrleitung durch die Erkennungseinrichtung (300), wenn die Fahreinrichtung (1200) fährt;
wenn gemäß einem Radar an dem Roboter bestimmt wird, dass der Roboter einen Rohrleitungsanschluss einer nächsten Abzweigrohrleitung erreicht, Anheben der Hindernisüberwindungsräder (237) auf eine gewisse Höhe und Freigeben eines Auslasses eines Behälters der Unter-Fahreinrichtung (400);
Drehen des Untermaschinenbehältersitzes (410), sodass der Winkel der aus dem Behälter austretenden Untermaschine (440) gemäß Abzweigrohrleitungen, die sich an verschiedenen seitlichen Positionen der Hauptrohrleitung befinden, angepasst wird;
translatorisches Gleiten der Untermaschinengleitplatte (420) aus dem Auslass des Behälters des Untermaschinenbehältersitzes (410) heraus und Anhalten des kontinuierlichen Gleitens, wenn ein vorderes Ende der Untermaschinengleitplatte (420) in einer Gleitrichtung eine Innenwand der Rohrleitung berührt;
Freigeben der Klemmung an der Untermaschine (440) durch die Untermaschinenklemmvorrichtung (430) und Antreiben von der Untermaschinengleitplatte (420) durch die Untermaschine (440) zu der Abzweigrohrleitung in eine Austrittsrichtung aus dem Behälter zur Inspektion;
nach dem Abschluss der Inspektion der Abzweigrohrleitung Zurückfahren entlang eines ursprünglichen Wegs durch die Untermaschine (440);
wenn sich die Untermaschine (440) vollständig auf der Untermaschinengleitplatte (420) befindet, Drehen des Untermaschinenbehältersitzes (410) zum Zurückfahren an eine ursprüngliche Position und Antreiben der Untermaschine (440), sodass diese in eine entgegengesetzte Richtung gleitet, durch die Untermaschinengleitplatte (420);
nach der Rückfahrt der Untermaschine (440) zu dem Untermaschinenbehältersitz (410) Klemmen der Untermaschine (440) durch die Untermaschinenklemmvorrichtung (430) und Platzieren der Hindernisüberwindungsräder (237) unten, um die Begrenzung des Behälterauslasses der Unter-Fahreinrichtung (400) weiterzuführen, und
Fortsetzen des Abfahrens und Inspizierens durch den Roboter in der Hauptrohrleitung, bis alle Abzweigrohrleitungen durchquert sind.

## Revendications

1. Robot utilisable pour l'inspection synchrone d'une longue canalisation de dérivation et d'une canalisation principale, comprenant :
un appareil de marche (1200) ;
un appareil de détection (300), situé au sommet de l'appareil de marche (1200), dans lequel l'appareil de détection (300) est configuré pour accompagner l'appareil de marche (1200) pour inspecter la canalisation principale ; et
dans lequel le robot est **caractérisé par** un appareil de marche secondaire (400), situé au niveau d'une extrémité avant de l'appareil de marche (1200) ;
dans lequel une paire d'appareils de franchissement d'obstacle de roue avant (230) de l'appareil de marche (1200) sont capables de limiter l'appareil de marche secondaire (400) tout en franchissant un obstacle dans la canalisation principale ; et, lorsque le robot rencontre la canalisation de dérivation, les appareils de franchissement d'obstacle de roue avant (230) sont configurés pour se lever d'une certaine hauteur, et libérer une sortie d'un bac de l'appareil de marche secondaire (400), et l'appareil de marche secondaire (400) est configuré pour être séparé de l'appareil de marche (1200) et inspecter de manière indépendante la canalisation de dérivation ;
l'appareil de marche secondaire (400) comprend un bac de machine secondaire (4130) et une machine secondaire (440) située dans le bac de machine secondaire (4130), dans lequel le bac de machine secondaire (4130) est situé au niveau d'une extrémité avant d'un tronc de marche (210) de l'appareil de marche (1200) et est situé entre la paire d'appareils de franchissement d'obstacle de roue avant (230), et des roues de franchissement d'obstacle (237) des appareils de franchissement d'obstacle de roue avant (230) sont configurées pour limiter des sorties à deux voies de la machine secondaire (440) sur le bac de machine secondaire (4130) ; et
le bac de machine secondaire (4130) comprend un siège de bac de machine secondaire (410), une plaque de coulissement de machine secondaire (420) et une pince de machine secondaire (430), dans lequel le siège de bac de machine secondaire (410) est capable de tourner autour du tronc de marche (210) pour ajuster un angle de la machine secondaire (440) sortant du bac, la plaque de coulissement de machine secondaire (420) est située à l'intérieur du siège de bac de machine secondaire (410) et est capable de coulisser en translation dans le siège de bac de machine secondaire (410), et la pince de machine secondaire (430) est configurée pour serrer ou libérer la machine secondaire (440) dans une direction perpendiculaire à la plaque de coulissement de machine secondaire (420) dans la plaque de coulissement de machine secondaire (420).

2. Robot selon la revendication 1, **caractérisé en ce que** l'appareil de marche (1200) comprend en outre des mécanismes de marche (220) disposés symétriquement sur deux côtés du tronc de marche (210), respectivement ;
les appareils de franchissement d'obstacle de roue avant (230) sont reliés de manière coaxiale aux mécanismes de marche (220) ; et
lorsque le robot rencontre un obstacle relativement grand, les roues de franchissement d'obstacle (237) des appareils de franchissement d'obstacle de roue avant (230) peuvent être soulevées jusqu'à un certain angle, et les mécanismes de marche (220) sont configurés pour entraîner les roues de franchissement d'obstacle (237) pour traverser l'obstacle.

3. Robot selon la revendication 2, **caractérisé en ce que** les appareils de franchissement d'obstacle de roue avant (230) comprennent un moteur oscillant (231), un engrenage de bras oscillant (232) et une crémaillère (233) qui sont situés dans le tronc de marche (210) et un arbre concentrique (234) relié de manière coaxiale à l'engrenage de bras oscillant (232) et traversant un côté du tronc de marche (210) ; et
les appareils de franchissement d'obstacle de roue avant (230) comprennent en outre un manchon d'arbre interne (235) situé sur un côté externe du tronc de marche (210) et relié de manière coaxiale et fixe à l'arbre concentrique (234), un boîtier de bras oscillant (236) relié de manière fixe au manchon d'arbre interne (235) et les roues de franchissement d'obstacle (237) reliées de manière fixe au boîtier de bras oscillant (236).

4. Robot selon la revendication 3, **caractérisé en ce que** le moteur oscillant (231) est configuré pour transférer de la puissance à l'engrenage de bras oscillant (232) et à la crémaillère (233) à travers une tige filetée (2311) et un écrou de vis (2312), et l'engrenage de bras oscillant (232) est engrené avec la crémaillère (233) pour entraîner l'arbre concentrique (234) en rotation et pour relier le manchon d'arbre interne (235) et le boîtier de bras oscillant (236) en rotation de sorte que le boîtier de bras oscillant (236) oscille vers le haut ou vers le bas et est capable d'entraîner les roues de franchissement d'obstacle (237) en mouvement dans une même direction.

5. Robot selon la revendication 4, **caractérisé en ce que** le mécanisme de marche (220) comprend un moteur d'entraînement de marche (221), un arbre externe concentrique (222) relié de manière coaxiale à l'arbre concentrique (234), un premier appareil de synchronisation (223) et des roues motrices (224) et des roues entraînées (225) entraînées par courroie avec les roues motrices (224) par le premier appareil de synchronisation (223), le premier appareil de synchronisation (223) et les roues motrices sont fixés sur l'arbre externe concentrique (222) ; et
le moteur d'entraînement de marche (221) est configuré pour entraîner un engrenage conique de transmission (2221) situé sur l'arbre externe concentrique (222) à travers un engrenage conique d'entraînement (2211) sur une extrémité de sortie, l'engrenage conique de transmission (2221) est configuré pour entraîner l'arbre externe concentrique (222) en rotation, l'arbre externe concentrique (222) est configuré pour entraîner de manière synchrone le premier appareil de synchronisation (223) en rotation, et une courroie synchrone du premier appareil de synchronisation (223) est configurée pour entraîner les roues motrices (224) et les roues entraînées (225) en rotation de manière synchrone.

6. Robot selon la revendication 5, **caractérisé en ce que** le mécanisme de marche (220) comprend en outre une plaque de fixation de palier (226), un palier à rouleaux croisés (227), un manchon d'arbre externe (228) et un deuxième appareil de synchronisation (229) ; et
la plaque de fixation de palier (226) est située sur le côté externe du tronc de marche (210) et est reliée à l'arbre externe concentrique (222) ;
le manchon d'arbre externe (228) et une bague externe du roulement à rouleaux croisés (227) sont reliés de manière fixe à la plaque de fixation de palier (226) en séquence ;
le manchon d'arbre interne (235) est relié de manière fixe à une bague interne du roulement à rouleaux croisés (227) ;
le deuxième appareil de synchronisation (229) est situé sur le manchon d'arbre externe (228) et est situé dans le boîtier de bras oscillant (236), une courroie synchrone du deuxième appareil de synchronisation (229) est configurée pour entraîner par courroie les roues de franchissement d'obstacle (237) ; et
lorsque l'arbre externe concentrique (222) tourne, les roues de franchissement d'obstacle (237) sont configurées pour être entraînées en rotation de manière synchrone avec les roues motrices (224) et les roues entraînées (225).

7. Robot selon la revendication 1, dans lequel la machine secondaire (440) comprend un corps de machine secondaire (441), un appareil télescopique (442) situé sur le corps de machine secondaire (441) et une caméra panoramique-basculante (443) située au sommet de l'appareil télescopique (442) ; et
le corps de machine secondaire (441) est capable d'avancer ou de reculer dans la canalisation de dérivation ;
la caméra panoramique-basculante (443) est configurée pour accompagner le corps de machine secondaire (441) pour marcher et inspecter la canalisation de dérivation ; et
l'appareil télescopique (442) est configuré pour entraîner la caméra panoramique-basculante (443) pour monter ou descendre, et la caméra panoramique-basculante (443) est capable de tourner axialement, d'osciller radialement et de détecter selon une pluralité d'angles sur l'appareil télescopique (442).

8. Procédé d'inspection pour un robot utilisable pour l'inspection synchrone d'une longue canalisation de dérivation et d'une canalisation principale, appliqué au robot utilisable pour l'inspection synchrone de la longue canalisation de dérivation et de la canalisation principale selon l'une quelconque des revendications 1 à 7 et **caractérisé en ce qu'**il comprend :
le placement du robot dans la canalisation principale ;
l'entraînement, par l'appareil de marche (1200), de l'appareil de marche secondaire (400) pour marcher dans la canalisation principale, et la détection, par l'appareil de détection (300), de la canalisation principale au fur et à mesure que l'appareil de marche (1200) marche ;
lorsqu'il est déterminé selon un radar sur le robot que le robot arrive au niveau d'un port de canalisation d'une canalisation de dérivation suivante, le soulèvement des roues de franchissement d'obstacle (237) d'une certaine hauteur, et la libération d'une sortie d'un bac de l'appareil de marche secondaire (400) ;
la rotation du siège de bac de machine secondaire (410) pour ajuster l'angle de la machine secondaire (440) sortant du bac en fonction des canalisations de dérivation situées à différentes positions latérales de la canalisation principale ;
le coulissement en translation de la plaque de coulissement de machine secondaire (420) hors de la sortie du bac du siège de bac de machine secondaire (410) et, lorsqu'une extrémité avant de la plaque de coulissement de machine secondaire (420) dans une direction de coulissement touche une paroi interne de la canalisation, l'arrêt du coulissement continu ;
le relâchement, par la pince de machine secondaire (430), du serrage sur la machine secondaire (440), et l'entraînement, par la machine secondaire (440), de la plaque de coulissement de machine secondaire (420) jusqu'à la canalisation de dérivation dans une direction de sortie du bac pour inspection ;
à l'issue de l'inspection de la canalisation de dérivation, le retour, par la machine secondaire (440), le long d'un trajet d'origine ;
lorsque la machine secondaire (440) est complètement située sur la plaque de coulissement de machine secondaire (420), la rotation du siège de bac de machine secondaire (410) pour revenir à une position d'origine, et l'entraînement, par la plaque de coulissement de machine secondaire (420), de la machine secondaire (440) en coulissement dans une direction opposée ;
après le retour de la machine secondaire (440) au siège de bac de machine secondaire (410), le serrage, par la pince de machine secondaire (430), de la machine secondaire (440), et l'abaissement des roues de franchissement d'obstacle (237) pour continuer à limiter la sortie de bac de l'appareil de marche secondaire (400) ; et
la poursuite de la marche et de l'inspection, par le robot, dans la canalisation principale jusqu'à ce que toutes les canalisations de dérivation soient traversées.
